# EUROPEAN PATENT APPLICATION

(11) **EP 1 176 807 A1**
(43) Date of publication of application: **30.01.2002**
(21) Application number: 01109924.9
(22) Date of filing: 24.04.2001
(51) Int. Cl.: H04N 3/15, H04N 9/04, H04N 5/335

(54) **Skewed pixel pattern sub-sampling for image sensor**

(30) Priority: 24.07.2000 US 624297
(71) Applicant: Agilent Technologies, Inc. (a Delaware corporation), Palo Alto, CA 94303 (US)
(72) Inventor: Meados, David B., Albany, Oregon 97321 (US)
(74) Representative: Schoppe, Fritz, Dipl.-Ing.

(57) **Abstract**

An image sensor pixel sub-sampling technique is described that provides fast imaging with improved image spatial resolution. In a skewed sub-sampling mode, the sample pattern for an imaging array is shifted left and right from row to row, to increase the horizontal sampling frequency of the image. The skewed sub-sampling reduces the feature size that can be resolved and also reduces angular alignment sensitivity. As a result, the range of images and feature sizes that can be captured within the desired image quality and sensing time thresholds are increased. For one embodiment, the skewed sub-sampling is performed while sampling the same number of pixels on each row that would be sampled when sub-sampling without shifting the pattern, and is performed at the same rate. Note that the option of skewing the pattern can be enabled or disabled, for example, by setting a programmable register bit. The skewed sub-sampling technique can be applied to a monochrome imaging array. Alternatively, skewed sub-sampling can be employed on a color imaging array, for example, one having a Bayer pattern.

## Description

### Background of the Invention

### 1. Field of the Invention

The present invention relates to solid-state imaging devices and, more particularly, to an active pixel sensor sub-sampling architecture for such imaging devices.

### 2. Description of the Related Art

Past electronic cameras used charge coupled device (CCD) imagers to convert optical images into corresponding electronic signals. A typical CCD imager includes a matrix of photosites (an array) that are capable of collecting free electrons that form an electrical charge packet that is directly proportional to the photon radiation incident at that photosite. Accordingly, when an image is focused on the surface of the array, the charge packet at each photosite of the array corresponds to a respective picture element or pixel of the complete image. The generated photosite charge packets are transferred in a parallel manner into a CCD shift register where they are transferred serially as an output signal of the CCD image. The CCD imager output signal is a series of electronic signals whose amplitude represent the light intensity of the image at each pixel for a single image frame. The process can be continuously repeated to generate output signals, which correspond to several image frames per second. Consequently, each frame in the generated output signal contains information concerning the detected light intensity at each photosite.

A drawback of typical CCD imagers is that they require near-perfect charge transfer over a distance of approximately 1-2 centimeters through semiconductor materials. Therefore, such CCD imagers require a substantial amount of power, are difficult to manufacture in large array sizes, and are difficult to integrate with complementary metal oxide semiconductor (CMOS) on-chip electronics. The difficulty is that the standard CCD process is incompatible with CMOS processing, while the imager signal processing electronics required for the imager are best fabricated in CMOS.

Therefore, active pixel sensors (APS) have become increasingly popular as an alternative to CCD imagers in camera equipment. APS employ one or more on-chip transistors at each pixel photosite in the array (see U.S. Patents No. 5,471,515 and European Patent application publication 957,630). The transistors at the photosite buffer a photo signal corresponding to the charge packet generated by the photosite and drive an output signal line avoiding the disadvantages of the CCD imagers that have to serially shift the data out. However, typical APS arrays still generate an output signal with each frame (representing a row of image data in the array) containing information representing the detected light intensity at each photosite.

Image sensor pixel arrays are typically sub-sampled to either scale the final image size and aspect ratio, to increase the frame rate over what can be achieved with the maximum resolution, or both. One drawback of CCD imaging arrays is that they have very limited capability to perform sub-sampling in the horizontal direction and their ability to increase the frame rate through horizontal sub-sampling is non-existent or extremely limited. CMOS image sensors have the capability to randomly access individual pixels, which means that the objective of increasing the nominal frame rate by increasing the sub-sample ratio is possible.

However, as the sub-sample ratio increases, the final image quality tends to decrease due to the information loss. The degree of degradation is a function of the size and alignment of the individual image features relative to the resolution of the optics and image sensor pixels. It is also a function of the spatial frequency of the samples taken, which is dictated by both the sub-sample ratio and the selected sub-sampling pattern.

Because CCD imaging arrays do not support true random access of pixels horizontally, the maximum increase in frame-rate resulting from horizontal sub-sampling cannot be achieved. Horizontal image scaling is commonly performed later in the image processing pipe. Any required frame rate increases must be achieved through vertical sub-sampling, which results in different horizontal and vertical ratios and image artifacts.

CMOS image sensors are capable of equivalent horizontal and vertical sub-sample ratios and can achieve frame rate increases via sub-sampling. However, CMOS sensors typically perform sub-sampling with the same columns sampled in each row using a rectangular grid sub-sampling pattern. The disadvantage of a uniform rectangular grid is that the spatial frequency of the samples is not maximized and the resulting patterns are particularly sensitive to degradation when focused on fine pitched vertical lines such as text.

Thus, it can be seen that modern sub-sampling techniques impose image spatial resolution and imaging time limits upon image sensors, and hinder the use of these sensors in many applications.

Therefore, there is an unresolved need for an improved image sensor sub-sampling technique that provides fast imaging with improved image spatial resolution.

### SUMMARY OF THE INVENTION

An image sensor pixel sub-sampling technique is described that provides fast imaging with improved image spatial resolution. In a skewed sub-sampling mode, the sample pattern for an imaging array is shifted left and right from row to row, to increase the horizontal sampling frequency of the image. The skewed sub-sampling reduces the feature size that can be resolved and also reduces angular alignment sensitivity. As a result, the range of images and feature sizes that can be captured within the desired image quality and sensing time thresholds are increased.

For one embodiment, the skewed sub-sampling is performed while sampling the same number of pixels on each row that would be sampled when sub-sampling without shifting the pattern, and is performed at the same rate. Note that the option of skewing the pattern can be enabled or disabled, for example, by setting a programmable register bit.

The skewed sub-sampling technique can be applied to a monochrome imaging array. Alternatively, skewed sub-sampling can be employed on a color imaging array, for example, one having a Bayer pattern.

### BRIEF DESCRIPTION OF THE DRAWINGS

The invention will be readily understood by the following detailed description in conjunction with the accompanying drawings, wherein like reference numerals designate like structural elements, and in which:
Figure 1 shows the structure of an active pixel sensor imaging device that incorporates skewed pixel sub-sampling circuitry according to the invention;
Figure 2 shows details of an active pixel sensor of the imaging device shown in Figure 1;
Figures 3A and 3B show details of respective skewed and non-skewed 2:1 sub-sampling patterns of the imaging device shown in Figure 1;
Figures 4A and 4B show details of respective skewed and non-skewed 4:1 sub-sampling patterns of the imaging device shown in Figure 1;
Figures 5A and 5B show details of alternative skewed sub-sampling patterns of the imaging device shown in Figure 1 ; and
Figure 6 is a diagram illustrating an imaging system having a skewed sub-sampling capability according to an embodiment of the present invention.

### DETAILED DESCRIPTION OF THE INVENTION

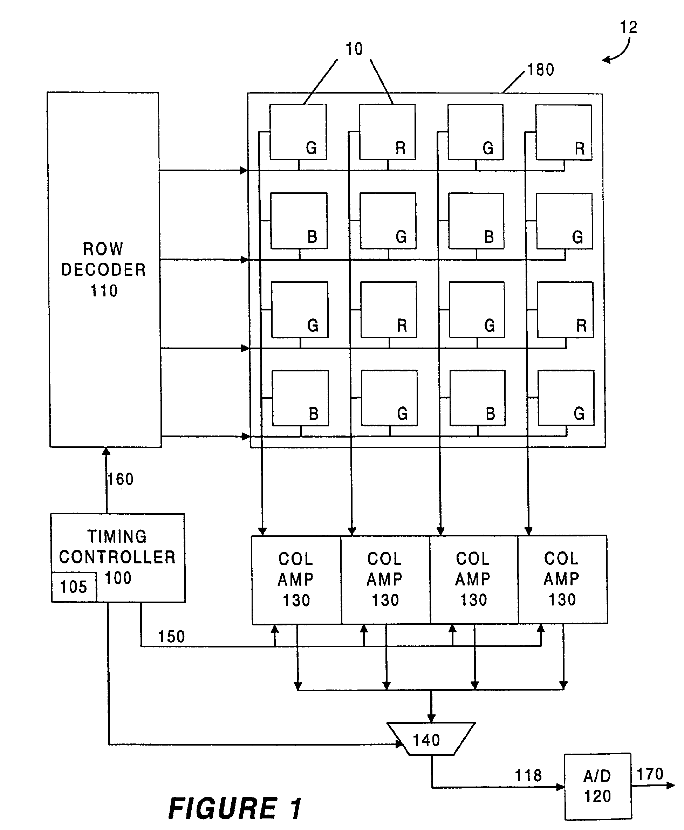

Embodiments of the invention are discussed below with reference to Figures 1-6. Those skilled in the art will readily appreciate that the detailed description given herein with respect to these figures is for explanatory purposes, however, because the invention extends beyond these limited embodiments.

Figure 1 includes a block diagram of an active pixel sensor array 180 used in the preferred embodiment and its associated circuitry used to control and read out the image that is formed on the array. The array 180 is made up of rows and columns of active pixel sensor sites (APS) 10. In Figure 1, the preferred embodiment of the invention employs a skewed-pattern pixel sub-sampling technique to provide fast imaging with improved image spatial resolution when image signal 170 is created by selectively sub-sampling APS sites 10 of active pixel sensor array 180. In this exemplary figure, 4 rows and 4 columns of sensor sites 10 are shown. However, those skilled in the art will appreciated that the number of rows and the numbers of columns could be any size and still meet the scope of the invention.

Depending upon the sub-sampling or sampling pattern selected, timing controller 100 selectively controls row decoder 110, column amplifiers 130 and steering logic 140 to sample some or all of the APS sites 10 of pixel sensor array 180. Timing controller 100 generates row control signals 160 to select a particular row of array 180 for sensing. Timing controller 100 also generates column control signals 170 to select pixels 10 within the selected row of array 180 for sensing. When the selected pixels 10 of a row are being read, the respective column amplifiers 130 are each driven to a level proportional to the incident light striking the selected pixel in that column of the selected row. The incident light is integrated over an exposure period to adjust to ambient lighting conditions. During column readout, the selected column amplifier 130 outputs are sequentially selected to provide the analog image signal 118. Analog-to-digital converter 170 converts analog image signal 118 to digital image signal 170. Typically, all of the column amplifiers 130 are identical sample and hold amplifiers utilizing the same control signals, bias voltages, and a reference voltage. The amplifying element in each column amplifier can be a simple two transistor amplifier or a more complex configuration to provide higher gains with lower power consumption at higher frequencies, thus allowing faster readout rates.

There are typically three phases of operation for the column amplifier: phase 1) select a row in the array, sample and store the image signal from the pixel in the selected row coupled to the common column line which is coupled to the column amplifier; phase 2) sample and store the reset state of the selected pixel and subtract from its stored sampled image signal; phase 3) present the output of the column amplifier 130 output line when selected to form image data to be processed further by other system electronics on an integrated circuit.

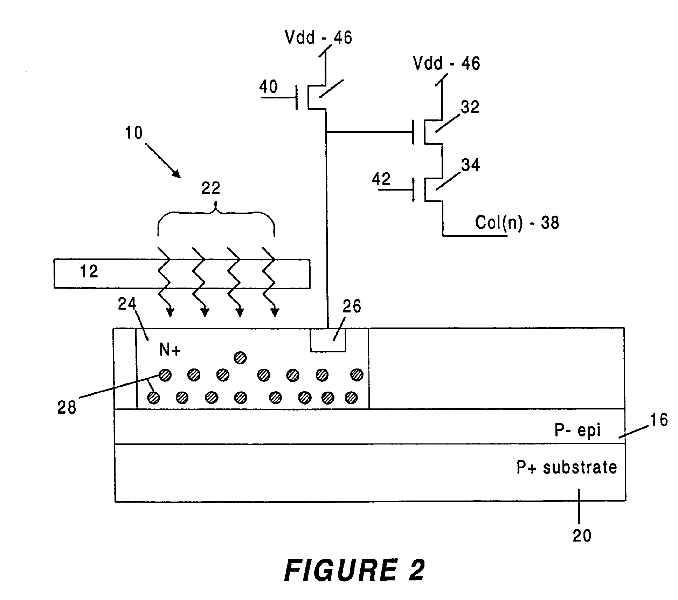

Figure 2 illustrates one type of an active pixel sensor (APS) site 10, which represents one pixel in the imaging array. This site performs the light to electrical signal transformation. An active pixel sensor array is a matrix of this APS site 10 formed in rows and columns (see Figure 1). These APS sites 10 are fabricated on a semiconductor substrate 20, an exemplary type being a P+ substrate shown in Figure 2. A photo well 24 is formed in the substrate and is designed to prevent leakage of non-photo generated charge into substrate 20. In Figure 2, a thin P- epitaxial layer 16 (epi) is formed on top of the P+ substrate 20 to further reduce this leakage. The photowell 24, shown in Figure 2, is made of an N+ material to form a diffusion node. Those skilled in the art will appreciate that other possible active pixel cell or even passive pixel cell implementations are possible without affecting the scope of the invention.

A contact 26 couples the photo well 24 to other circuitry used to control and convert the light source 22 striking the photo well 24. The photo well 24 (a diffusion node) is a reversed biased diode (commonly known as a photodiode), which includes a parasitic capacitor which can store charge 28, thus creating a voltage potential. This stored charge 28 is supplied from power supply 46 (Vdd) by a reset switch 40, which when activated fills photo well 24 with charge 28. After the reset switch 40 is opened, the light source 22 striking the photo well 24 causes photonic energy from the light source 22 to form a number of electron-hole pairs in both the photowell 24 and the underlying substrate 20. The number of electron-hole pairs is a function of the intensity of the received light energy in light source 22. The holes formed in photowell 24 in turn, diffuse to the junction with the substrate 20 where they are swept into the substrate 20 under the influence of an electric field at the bias junction of photowell 24 and substrate 20. Similarly, the electrons formed in substrate 20 diffuse to the junction of the photowell 24 and substrate 20 where they are swept to photowell 24 and collected at contact 26. Thus, with the addition of each photo-generated electron in photowell 24, the voltage at contact 26 is correspondingly reduced.

Generally, to keep the fill factor (the ratio of the area of the photo well 24 to the APS site 10 area, i.e. photo well 24 area/APS site 10 area) as large as possible, the reset switch 40, buffer 32, and row select switch 34 are fabricated preferably as NMOS FET devices. This fact requires that the gate of each transistor be at least one threshold higher than the source of the transistor to turn on the transistor. Thus, the maximum voltage potential that the photo well 24 will be charged to is one gate threshold (the magnitude of which is determined by the IC process used, typically 0.8V to 1.2V) less than the voltage present on the gate of reset switch 40, an exemplary value being power supply voltage 46, VDD. Likewise, the voltage follower style buffer 32 will cause its source to be one gate threshold below the signal on its gate. Therefore, the maximum signal that the common column line 38 sees is the power supply voltage 46 (Vdd) less two gate threshold voltages. Also, this maximum signal represents when there is no light source 22 striking the photo well. As light source 22 strikes the photo well, the signal level shown on the common column line 38 will decrease at a rate proportional to the light intensity of light source 22, to voltage potential ground on a maximum intensity light source 22.

As mentioned previously, timing controller 100 of Figure 1 is used to select which row and which column to read out of the array through row control signals 160 coupled to row decoder 110. The timing controller 100 also generates the timing for a set of column amplifiers 130. In addition, the timing controller either sequentially selects each column for output or can be programmed, to output the columns at different intervals depending on the desired resolution, when, for example, register 105 has been set to enter a sub-sampling mode. An example for sub-sampling a half resolution image (from the maximum resolution determined by the number of rows and columns) might be to select every other column and every other row.

In accordance with the present invention, the timing controller 100 can be set to enter a skewed sub-sampling mode. The basic idea of horizontal sub-sampled skewing is to shift the horizontal sub-sample pattern right then left on alternating rows to improve the spatial distribution of samples. This allows higher frequency sampling while outputting the same number of pixels at the same frame rate as a sub-sampled sensor that does not support horizontal skewing. It can also be applied to any decimation ratio.

Skewed sub-sampling increases the spatial distribution of pixels sampled which therefore reduces, for a given set of optics and pixels, the size of the feature which can be sampled at a high enough frequency for a high quality reproduction. The spatial distribution provided by skewed sub-sampling also reduces the angular alignment sensitivity to small features. It can do the above while still performing random sampling of the pixels and therefore maximizing the frame rate.

Non-skewed sub-sampling has been performed before in CCD image sensors. However, CCD sensors have very limited horizontal sub-sampling capabilities and the patterns cannot be skewed without suffering a time penalty. Still the scope of the present invention is envisaged to include skewed sub-sampling of CCD sensors. This is because even though it may take longer than non-skewed sub-sampling of CCD sensors, the spatial distribution of the pixels sampled using skewed sub-sampling permits increased resolution of small objects and reduced angular sensitivity to small features.

Although skewed sub-sampling can be employed advantageously in a monochromatic image sensor, it can also be used in a color image sensor. Image array sensors are commonly used in solid state cameras and color image sensors are known which comprise a two-dimensional array of sensing cells which is provided with a matrixed pattern of color filters, for example, red, green and blue filters (e.g., filter 12 of Figure 2). Cell outputs corresponding to different colors are demultiplexed at the array output and fed to respective color channels.

Through a process known in the art as "demosaicing", pixel values for each channel can be approximated at each sensor site. For example, the red-channel value at a sensor site having a green filter can be approximated by averaging the red-channel values of the nearest sensor sites having a red. More sophisticated demosaicing schemes are known which may also be employed. For example, if an edge is detected in the vicinity of a pixel, a neighboring same color-channel colored site may be excluded from the estimate calculation if it lies on the side of the edge opposite from that of the pixel being estimated.

Commonly, neighboring sensing cells in the array have different color filters in order to achieve appropriate spatial sampling of radiation of each color being sensed for each color channel of the sensor. Adjacent sensing cells in each row may be formed and arranged for sensing radiation of wavelengths corresponding to different ones of a plurality of color channels. Each row may, for example, contain three series of sensing cells, for sensing red, green and blue wavelength radiation respectively. The three series of cells may be interspersed such that each row contains an alternating pattern of red (R), green (G), and blue (B), sensing cells e.g. R G B R G B R G ... Alternatively, each row may, for example, contain only two series of sensing cells. The two series of cells in each row may be arranged so that every third cell senses a different color radiation to every first and second cell e.g. B B R B B R B B R... An interspersed series of sensing cells contained in any one row may have sensing cells for sensing at least one different color radiation to the sensing cells of the interspersed series of cells in another row. For example, a first row may contain two series of cells for sensing red and blue radiation and a second row may contain two series of cells for sensing red and green radiation.

In one embodiment of this type of color image array sensor, the matrixed pattern of color filters is a Bayer matrix as described in US patent no. 3,971,065. A Bayer matrix is shown schematically in pixel sensor array 180 of Figure 1. Although the skewed sub-sampling will be discussed in the context of the Bayer pattern, it is to be understood that this pattern is used for purpose of example and that other patterns may be employed without departing from the scope of the invention. In the Bayer matrix, each row of the array has two series of pixels. All of the pixels of each series have the same color of filter and the color filters of the pixels in each series are either red (R), green (G) or blue (B). The two series of pixels in each row are interspersed so as to form an alternating two-color pattern e.g. G R G R G R ... etc. The first and every subsequent odd-numbered row have the pixel color pattern G R G R G R ... etc. The second and every subsequent even-numbered row have the pixel color pattern B G B G B G ... etc.

The Bayer matrix pixel array pattern shown in Figure 1 has many favorable properties for color image reconstruction. It is known that the human eye is more sensitive to luminance than chrominance, and that green pixels carry the majority of the luminance information. By utilizing the skewed sub-sampling mode to shift the sample pattern left and right from row to row, the horizontal sampling frequency of the image luminance is increased, thus reducing the feature size that can be resolved and reducing the angular alignment sensitivity. As a result, the range of images and feature sizes that can be captured within the desired image quality thresholds are increased. For one embodiment, this is done while sampling the same number of pixels on each row that would be sampled when the pattern is not shifted, and performed at the same rate. Note that the option of skewing the pattern can be enabled or disabled via a programmable register bit, e.g., in register 105 of Figure 1.

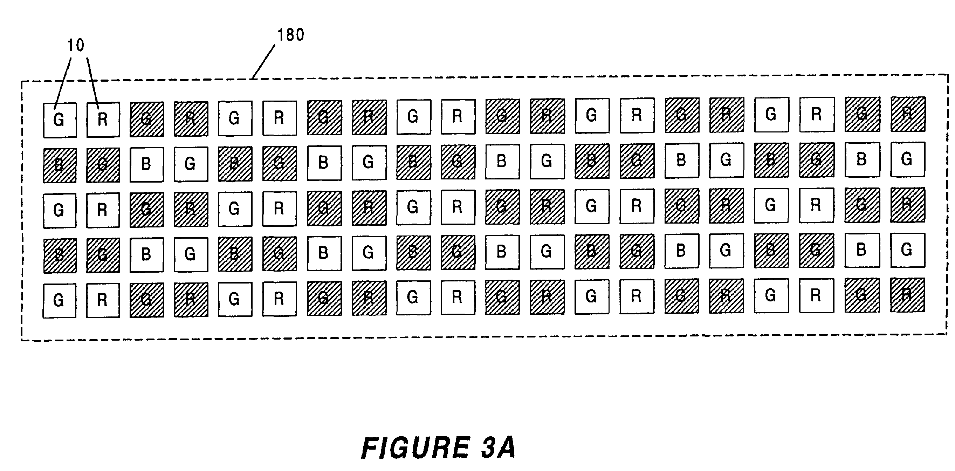

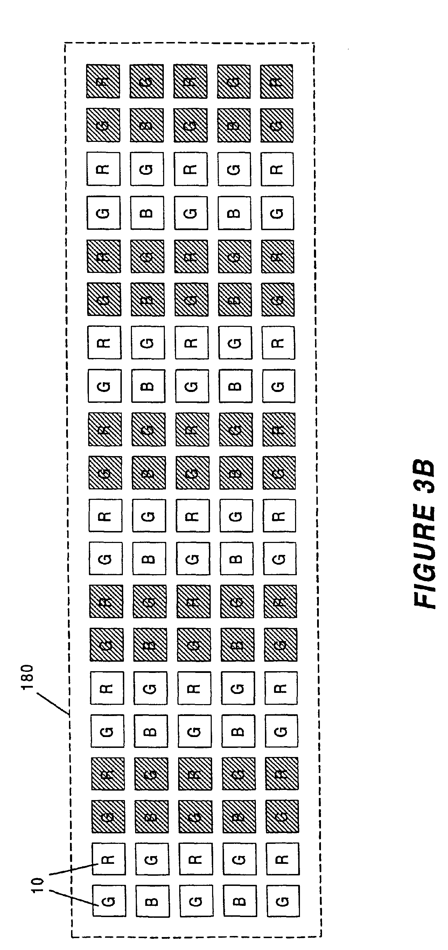

Figures 3A and 3B show details of respective skewed and non-skewed 2:1 sub-sampling patterns of the imaging device shown in Figure 1. For the embodiment shown in Figure 3A, pixel sensors 10 of pixel sensor array 180 are read in a skewed sub-sampling mode whereby the non-shaded sensors are read and the shaded sensors are not. The top, middle and bottom rows form a set of "G-R" rows that have a read sub-set of a G and an adjacent R sensor (forming the top half of a Bayer pattern). For each of the G-R rows, each G-R series of sensors to be read forms a read sub-set which is separated from another G-R series of sensors to be read by a G-R series of sensors which will not be read (in the 2:1 skewed sub-sampling mode).

Interlaced with the G-R rows is a set of "B-G" rows that have a read sub-set of a B and an adjacent G sensor (forming the bottom half of a Bayer pattern). For each of the B-G rows, each B-G series of sensors to be read forms a read sub-set which is separated from another B-G series of sensors to be read by a B-G series of sensors which will not be read (in the 2:1 skewed sub-sampling mode).

The skewing of the sub-sampling pattern is such that for a pair of adjoining rows, a pixel in G-R read sub-set will not have a pixel in a B-G read subset in the same column. Thus, for example, the G sensor in the left-most column of the top row will be read, but the B sensor directly beneath it in the left-most column will not be read.

Figure 3B shows details of a non-skewed 2:1 sub-sampling pattern such as might be sampled in a non-skewed sub-sampling mode. As in Figure 3A, the non-shaded sensors 10 of array 180 are read and the shaded sensors 10 are not read. However, unlike Figure 3A, in Figure 3B, there is no skewing of the sensors to be read. Without the skewing, the sub-sampling pattern is such that for a pair of adjoining rows, a pixel in G-R read sub-set will have a corresponding pixel in a B-G read subset in the same column. Thus, for example, the G sensor in the left-most column of the top row will be read, and the B sensor directly beneath it in the left-most column will also be read.

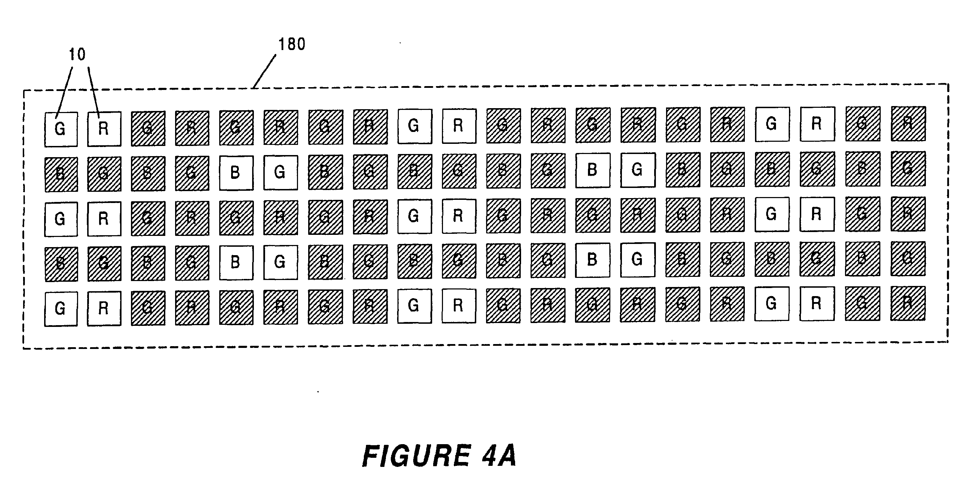

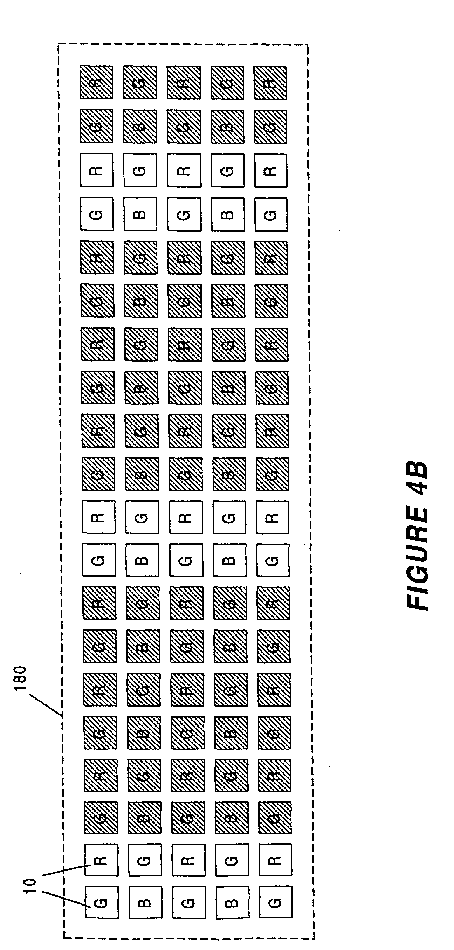

Figures 4A and 4B show details of respective skewed and non-skewed 4:1 sub-sampling patterns of the imaging device shown in Figure 1. For the embodiment shown in Figure 4A, pixel sensors 10 of pixel sensor array 180 are read in a skewed sub-sampling mode whereby the non-shaded sensors are read and the shaded sensors are not. The top, middle and bottom rows form a set of "G-R" rows that have a read sub-set of a G and an adjacent R sensor (forming the top half of a Bayer pattern). For each of the G-R rows, each G-R series of sensors to be read forms a read sub-set which is separated from another G-R series of sensors to be read by three G-R series sets of sensors which will not be read (in the 4:1 skewed sub-sampling mode).

Interlaced with the G-R rows is a set of "B-G" rows that have a read sub-set of a B and an adjacent G sensor (forming the bottom half of a Bayer pattern). For each of the B-G rows, each B-G series of sensors to be read forms a read sub-set which is separated from another B-G series of sensors to be read by three B-G series sets of sensors which will not be read (in the 4:1 skewed sub-sampling mode).

As was the case in Figure 3A, the skewing of the sub-sampling pattern shown in Figure 4A is such that for a pair of adjoining rows, a pixel in G-R read sub-set will not have a pixel in a B-G read subset in the same column. Thus, for example, the G sensor in the left-most column of the top row will be read, but the B sensor directly beneath it in the left-most column will not be read. However, unlike the case in Figure 3A, whole columns of sensors are not read in Figure 4A because of the higher sub-sampling rate.

Figure 4B shows details of a non-skewed 4:1 sub-sampling pattern such as might be sampled in a non-skewed sub-sampling mode. As in Figure 4A, the non-shaded sensors 10 of array 180 are read and the shaded sensors 10 are not read. However, unlike Figure 4A, there is no skewing of the sensors to be read in Figure 4B. Without the skewing, the sub-sampling pattern is such that for a pair of adjoining rows, a pixel in the G-R read sub-set will have a corresponding pixel in a B-G read subset in the same column. Thus, for example, the G sensor in the left-most column of the top row will be read, and the B sensor directly beneath it in the left-most column will also be read.

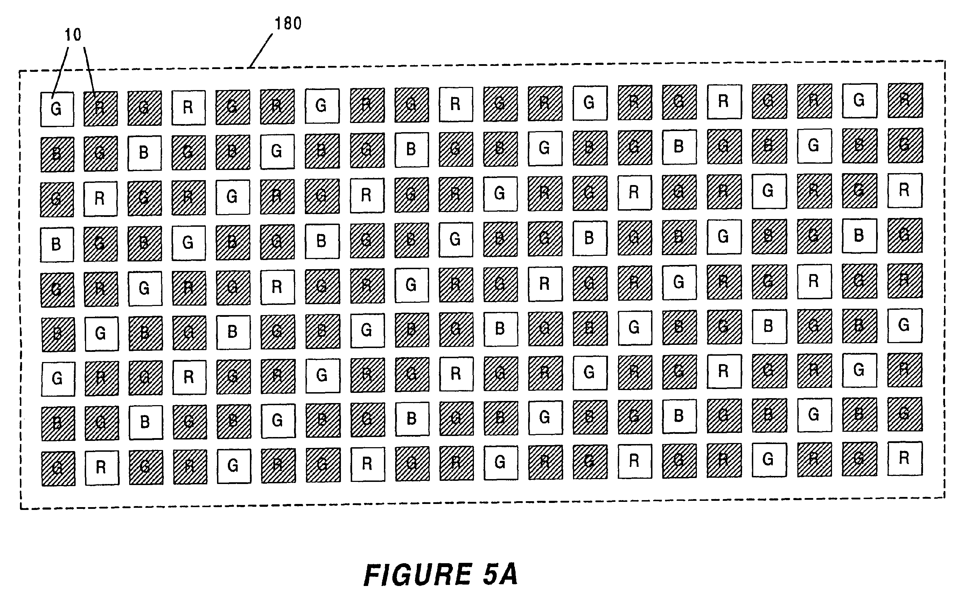

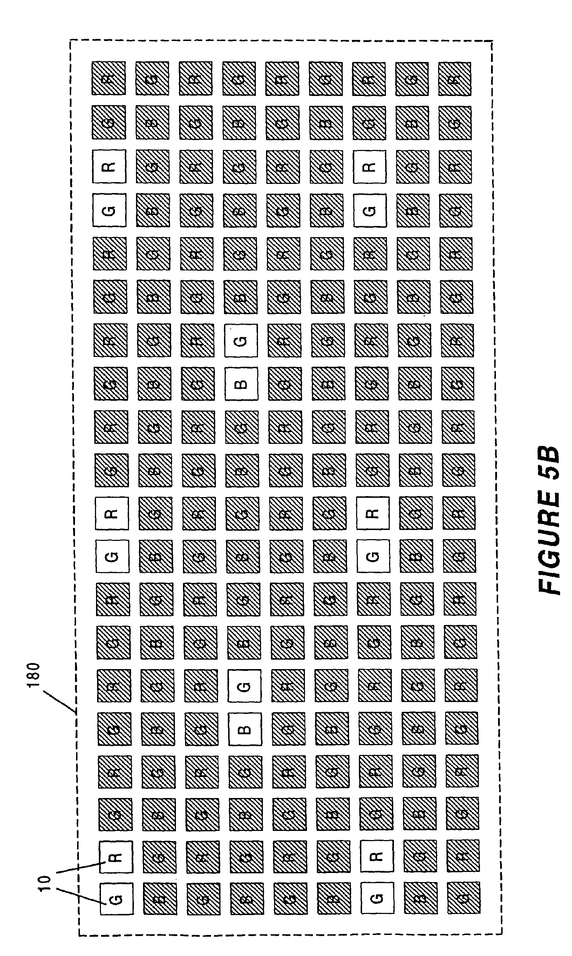

Figures 5A and 5B show details of alternative skewed sub-sampling patterns of the imaging device shown in Figure 1. For the embodiment shown in Figure 5A, pixel sensors 10 of pixel sensor array 180 are read in a skewed sub-sampling mode whereby the non-shaded sensors are read and the shaded sensors are not. The top row and every-other-row from the top row form a set of "G-R" rows that have a read sub-set of a G and a non-adjacent R sensor (forming the top half of a Bayer pattern).

For each of the G-R rows, each G-R set of sensors to be read forms a read sub-set wherein each G sensor to be read is separated from its corresponding R sensor to be read by a pair of adjacent R and G sensors that are not read. Each G-R set of sensors to be read, in turn, is separated from another G-R set of sensors to be read by a pair of adjacent G and R sensors which will not be read (in this skewed sub-sampling mode).

Interlaced with the G-R rows is a set of "B-G" rows that have a read sub-set wherein each B sensor to be read is separated from its corresponding G sensor to be read by a pair of adjacent G and B sensors that are not read. Each B-G set of sensors to be read (forming the bottom half of a Bayer pattern), in turn, is separated from another B-G set of sensors to be read by a pair of adjacent B and G sensors which will not be read (in this skewed sub-sampling mode).

As was the case in Figures 3A and 4A, the skewing of the sub-sampling pattern shown in Figure 5A is such that for a pair of adjoining rows, a pixel in G-R read sub-set will not have a pixel in a B-G read subset in the same column. Thus, for example, the G sensor in the left-most column of the top row will be read, but the B sensor directly beneath it in the left-most column will not be read.

For the embodiment shown in Figure 5B, pixel sensors 10 of pixel sensor array 180 are read in a skewed sub-sampling mode whereby the non-shaded sensors are read and the shaded sensors are not. The top row and every-other-row from the top row form a set of "G-R" rows. Half of the G-R rows have a read sub-set of a G and an adjacent R sensor (forming the top half of a Bayer pattern). The other half of the G-R rows do not have any sensors to be read. For each of the G-R rows having sensors to be read, each G-R series of sensors to be read forms a read sub-set which is separated from another G-R series of sensors to be read by three G-R series sets of sensors which will not be read (in this skewed sub-sampling mode).

Interlaced with the G-R rows is a set of "B-G" rows. Half of the B-G rows have a read sub-set of a B and an adjacent G sensor (forming the bottom half of a Bayer pattern). The other half of the B-G rows do not have any sensors to be read. For each of the B-G rows having sensors to be read, each B-G series of sensors to be read forms a read sub-set which is separated from another B-G series of sensors to be read by three B-G series sets of sensors which will not be read (in this skewed sub-sampling mode).

As was the case in Figures 3A, 4A and 5A, the skewing of the sub-sampling pattern shown in Figure 5B is such that for a pair of adjoining rows, a pixel in G-R read sub-set will not have a pixel in a B-G read subset in the same column. Thus, for example, the G sensor in the left-most column of the top row will be read, but none of the B sensors beneath it in the left-most column will be read. However, unlike the case in Figure 3A, whole columns of sensors are not read in Figure 5B because of the higher sub-sampling rate. Moreover, in Figure 5B whole rows of sensors are also not read because of the higher sub-sampling rate.

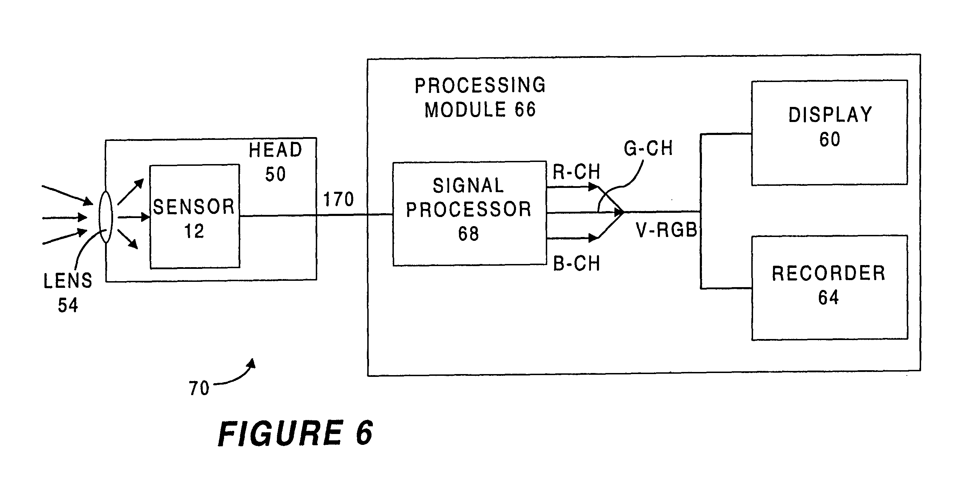

Figure 6 shows schematically the layout of a solid state camera system 70 incorporating the image array sensor of Figure 1 (referenced as 12 in Figure 6). The camera system includes a camera head 50 comprising a lens 54 and the image array sensor 12. The signal stream of pixel outputs read out at the main array output are fed to an analog to digital convertor where the pixel outputs are converted from analog to digital signals. The digital signals 170 are subsequently fed to a signal processing unit 68 which may be configured and/or programmed to demultiplex the pixel output streams into red, green and blue color channels (R-CH, G-CH, B-CH) of a video signal V-RGB. Video signal V-RGB is output by the processing unit 68 to a video display unit 60, and/or a recording device 62, coupled to the processing unit 68. (The processing unit preferably also interpolates the red, green and blue channel signals to form synchronous, parallel color channel signals for the video signal V-RGB before being output to the display unit 60, and/or recording device 64.) In the embodiment illustrated in Figure 6 the processing unit 68 is provided on a second integrated circuit which is provided together with the display unit 60 and/or recording device 64 in an image processing unit or module 66 of the camera system 70 for use with the camera head 50. The A/D convertor is provided in circuitry incorporated in the camera head 22, (which could, if desired, be integrally provided in the image sensor integrated circuit). The second integrated circuit may also include demosaicing, color balance control circuitry and/or exposure control circuitry of the camera system.

It is envisaged that the camera head 50 need not always be used with the image processing unit 68 shown in the camera system of Figure 6. It would be possible, for example, for image data output from the image sensor 12 in the camera head 50 to be fed straight to a recording device where the output signal streams would be recorded on a recording medium (e.g. a computer hard disk, or a floppy disk). The recorded image data (in its output signal stream form) would be demultiplexed into color channels to form a video signal and/or image at a later date by reading the recorded data into a suitably programmed processor.

In an alternative embodiment (not shown) the A/D convertor is incorporated in the image processing unit 68, rather than in the camera head. Similarly, in a further possible embodiment (not shown) A/D conversion and some, or all, of the signal processing performed by the processing unit 68 is carried out in the camera head 50. This may be done, for example, by processing circuitry included on the same chip as that on which the integrated circuit image array sensor is formed. The processing circuitry on the chip may thus be configured to digitally format the image data output from the sensor and to convert the formatted data into a standard video form which can be input directly to a video display unit and/or recorder device, or stored in an external memory for future use. Alternatively, the processing circuitry on the chip may be configured to convert the image data output from the sensor into a particular digital format, the formatted data then being output from the camera head 50 to further external signal processing circuitry which is programmed, or configured, to interpret the formatted data and produce therefrom a standard video signal (e.g. in three channel R, G, B form) for use as before.

It will also be appreciated that the invention is suitable for multispectral sensors in which some of the pixels are treated so as to sense non-visible radiation which may, for example, be infra-red radiation. Thus, for example, at least one of said plurality of channels may be for infra-red or other non-visible radiation and some of the sensing cells may consequently be for sensing infra-red or other non-visible radiation respectively.

For one embodiment, the array of sensing cells has been shown to include a matrixed pattern of filters corresponding to different radiation wavelengths so as to enable essentially similar sensing cells to sense radiation at a particular wavelength, or over a particular band of wavelengths, corresponding to a respective one of said plurality of channels. Alternatively there could be cells having sensing surfaces responsive to different radiation wavelengths.

The many features and advantages of the invention are apparent from the written description and thus it is intended by the appended claims to cover all such features and advantages of the invention. Further, because numerous modifications and changes will readily occur to those skilled in the art, it is not desired to limit the invention to the exact construction and operation as illustrated and described. Hence, all suitable modifications and equivalents may be resorted to as falling within the scope of the invention.

## Claims

1. An imaging device, comprising:
an array of pixel sensors (180), the pixel sensors (10) being arranged into rows and columns;
a timing controller (100) having a skewed sub-sampling mode, when placed in the skewed sub-sampling mode, the timing controller causing a sub-sample of the pixel sensors to be read whereby first and second read sub-sets of the pixel sensors are read, the first read sub-set being from a first set of the rows; and the second read sub-set being from a second set of the rows; the first and second sets of the rows being interlaced and the pixels to be read being skewed such that, for a pair of adjoining rows, a pixel in the first read sub-set will not have a pixel from the second read sub-set in the same column.

2. The imaging device as set forth in claim 1, wherein the timing controller (100) uses random access to address and read each of the pixel sensors to be read.

3. The imaging device as set forth in claim 1, wherein the pixel sensors (10) correspond to a plurality of color channels.

4. The imaging device as set forth in claim 3, wherein the first read sub-set corresponds to a first color-channel sub-set of the plurality of color channels and the second read sub-set corresponds to a second color-channel sub-set of the plurality of color channels.

5. The imaging device as set forth in claim 4, wherein the first color-channel sub-set is red and green and the second color-channel sub-set is green and blue.

6. The imaging device as set forth in claim 1, wherein a third set of the rows is interlaced with the first and second sets of the rows and wherein no pixels are read from the third set of the rows when in the skewed mode.

7. The imaging device as set forth in claim 1, wherein there is a third read sub-set from the second set of the rows and the timing controller (100) has a non-skewed sub-sampling mode, when placed in the non-skewed sub-sampling mode, the timing controller (100) causing the pixel sensors (10) to be read whereby the first and third read sub-sets of the pixel sensors (10) are read without the pixels to be read being skewed such that, for the pair of adjoining rows, a pixel in the first read sub-set will have a pixel from the third read sub-set in the same column.

8. The imaging device as set forth in claim 1, wherein the timing controller (100) has a non-sub-sampling mode, when placed in the non-sub-sampling mode, the timing controller (100) causing all of the pixel sensors to be read.

9. The imaging device as set forth in claim 1, comprising a signal processor (68) to process a signal from the pixel sensors to be read.

10. The imaging device as set forth in claim 9, comprising a display (60) to display and image based upon the signal from the pixel sensors to be read.

11. The imaging device as set forth in claim 9, comprising a recorder (62) to store an image based upon the signal from the pixel sensors to be read.

12. An imaging method, comprising:
placing a timing controller into a skewed sub-sampling mode, the timing controller being for an array of pixel sensors, the pixel sensors being arranged into rows and columns;
when placed in the skewed sub-sampling mode, the timing controller causing a sub-sample of the pixel sensors to be read whereby first and second read sub-sets of the pixel sensors are read, the first read sub-set being from a first set of the rows; and the second read sub-set being from a second set of the rows; the first and second sets of the rows being interlaced and the pixels to be read being skewed such that, for a pair of adjoining rows, a pixel in the first read sub-set will not have a pixel from the second read sub-set in the same column.

13. The imaging method as set forth in claim 12, wherein the timing controller uses random access to address and read each of the pixel sensors to be read.

14. The imaging method as set forth in claim 12, wherein the pixel sensors correspond to a plurality of color channels.

15. The imaging method as set forth in claim 14, wherein the first read sub-set corresponds to a first color-channel sub-set of the plurality of color channels and the second read sub-set corresponds to a second color-channel sub-set of the plurality of color channels.

16. The imaging method as set forth in claim 15, wherein the first color-channel sub-set is red and green and the second color-channel sub-set is green and blue.

17. The imaging method as set forth in claim 12, wherein a third set of the rows is interlaced with the first and second sets of the rows and wherein no pixels are read from the third set of the rows when in the skewed mode.

18. The imaging method as set forth in claim 12, wherein there is a third read sub-set from the second set of the rows and the timing controller has a non-skewed sub-sampling mode, when place in the non-skewed sub-sampling mode, the timing controller causing the pixel sensors to be read whereby the first and third read sub-sets of the pixel sensors are read without the pixels to be read being skewed such that, for the pair of adjoining rows, a pixel in the first read sub-set will have a pixel from the third read sub-set in the same column.

19. The imaging method as set forth in claim 12, wherein the timing controller has a non-sub-sampling mode, when placed in the non-sub-sampling mode, the timing controller causing all of the pixel sensors to be read.
